# EUROPÄISCHE PATENTSCHRIFT

(11) **EP 1 435 067 B1**
(45) Veröffentlichungstag und Bekanntmachung des Hinweises auf die Patenterteilung: **31.08.2011**
(21) Anmeldenummer: 02800603.9
(22) Anmeldetag: 07.10.2002
(51) Int. Cl.: G06K 19/077

(54) **EINRICHTUNG ZUM ABSCHIRMEN EINES TRANSPONDERS, VERFAHREN ZUM HERSTELLEN EINER ENTSPRECHENDEN ABSCHIRMUNG SOWIE TRANSPONDER MIT ABSCHIRMUNG**
DEVICE FOR SHIELDING A TRANSPONDER, METHOD FOR PRODUCING A CORRESPONDING SHIELDING AND TRANSPONDER PROVIDED WITH SAID SHIELDING
DISPOSITIF POUR BLINDER UN TRANSPONDEUR, PROCEDE POUR PRODUIRE UN BLINDAGE CORRESPONDANT ET TRANSPONDEUR EQUIPE DE CE BLINDAGE

(30) Priorität: 05.10.2001 DE 10149126
(43) Veröffentlichungstag der Anmeldung: 07.07.2004
(73) Patentinhaber: FlexChip AG, 80686 München (DE)
(72) Erfinder: PLETTNER, Andreas, 82340 Feldafing (DE); STEIN, Arno, 80339 München (DE)
(74) Vertreter: Grünecker, Kinkeldey, Stockmair & Schwanhäusser Anwaltssozietät
(86) Internationale Anmeldenummer: PCT/EP2002/011217
(87) Internationale Veröffentlichungsnummer: WO 2003/032246

(56) Entgegenhaltungen:
- EP-A- 0 782 214
- WO-A-89/07347
- GB-A- 1 331 604
- US-A- 4 486 731

## Beschreibung

Die vorliegende Erfindung bezieht sich auf eine Abschirmung für einen Transponder, enthaltend zumindest einen Chip und eine Antennenstruktur.

In vielen Bereichen des öffentlichen Lebens werden in den letzten Jahren verstärkt RFID-Systeme zur Identifikation von beliebigen Objekten verwendet. Der Term RFID steht hierbei für Radio-Frequency-Identification und bezeichnet eine Identifikation mittels Radiowellen. Ein RFID-System besteht immer aus zwei Komponenten: einem Auswertegerät, das als Lese- und/oder Schreib-Einheit ausgebildet sein kann, und einem Transponder, der die zur Identifikation verwendeten Daten trägt.

Derzeitig gefertigte Transponder umfassen einen kleinflächigen Chip und eine Antennenstruktur. Die am weitesten verbreitete Anwendung von Transpondern sind kontaktlose Chip-Karten, die heutzutage überwiegend als Zahlungsmittel in Form von Scheck-Karten, oder als Zugangskontrollmittel in Form von Zugangstickets oder Firmenausweisen verwendet werden, wobei in einer Speichereinrichtung des Chips entsprechende Identifizierungsdaten gespeichert sind. Kontaktlose Chip-Karten gestatten eine einfache Handhabung, sind robust ausgestaltet und weisen somit eine geringe Störanfälligkeit auf, und bieten eine Reihe interessanter Möglichkeiten in der Anwendung.

Die Fortschritte in der Siliziumtechnik ermöglichen extrem energiearme, passive Transponder. Insbesondere sind Transponder realisierbar, die aus einem Hochfrequenzfeld (HF-Feld) Energie beziehen und damit Daten speichern und mittels einer Dämpfungsmodulation zurücksenden. Bei einer derartigen Datenübertragung ist aus prinzipiellen elektrotechnischen Gründen die Übertragungsbandbreite auf einen Bruchteil einer Trägerfrequenz beschränkt, wobei derzeit Datenraten von annähernd 58 Kbit realisiert werden. Weitere Entwicklungen im Bereich der Chip-Technik werden voraussichtlich zu Chips führen, die bei ca. 1 mm² Chipfläche eine Datenmenge von ungefähr 1 Mbit speichern können. Das Auslesen einer derartigen Datenmenge dauert bei den derzeit realisierten Bitraten ca. 18 Sekunden.

Um diese Datenraten zu erhöhen, muss zu höheren Trägerfrequenzen übergegangen werden, was durch Weiterentwicklungen im Chip-Bereich, insbesondere in der CMOS-Technik ermöglicht wird, da Schaltungen mit Taktzeiten von 1 GHz und höher, auch aufgrund der ständig verkleinerten Strukturen, möglich sind.

Die Antennenstruktur gebräuchlicher Transponder wird entweder als Leiterschleife oder als Dipol ausgebildet. Die Ausbildung als Leiterschleife ermöglicht eine induktive Signaleinkopplung, die den Vorteil bietet, in Resonanz betrieben werden zu können. Hierzu wird die Leiterschleife mit einer Kapazität zu einem Schwingkreis verschaltet, der auf die Arbeitsfrequenz der kontaktlosen Chip-Karte abgestimmt ist und mit einer Spule des Auswertegeräts einen locker gekoppelten Transformator bildet.

Derartige induktive Transponder können über eine Distanz von einigen Zentimetern bis hin zu einigen Metern Daten mit einem Auswertegerät austauschen. Hierbei werden die Transponder in der Regel im Frequenzbereich von einigen MHz betrieben, üblicherweise bei der freigegebenen Frequenz von 13,56 MHz. Da die zum Betrieb des Chips benötigte Energie über die Leiterschleife kontaktlos von dem Auswertegerät empfangen wird, so dass der Transponder nicht über eine eigene Spannungsquelle verfügen muss und sich insbesondere außerhalb des Wirkungsbereichs des Auswertegeräts völlig passiv verhält, wird bei niedrigeren Frequenzen die benötigte Windungszahl der Leiterschleife zu hoch und bei höheren Frequenzen werden die Induktivitäten zu gering, um eine Leiterschleife mit ausreichender Güte zu realisieren.

Für den Fall, dass die Antennenstruktur als Dipol ausgebildet ist, kann der Transponder sowohl in einem sogenannten "Close-Coupling-System" wie auch in einem "Long-Range-System" verwendet werden.

Close-Coupling-Systeme sind RFID-Systeme mit sehr kleinen Reichweiten, in denen der Dipol des Transponders eine rein kapazitive Signaleinkopplung eines Auswertegeräts ermöglicht, das sich in einem geringen Abstand von ungefähr 0,1 cm bis 1 cm zu dem Transponder befindet und ebenfalls geeignete Elektrodenflächen aufweist. Zur Signaleinkopplung werden beide Dipole parallel zueinander platziert und bilden somit Plattenkondensatoren, über die Daten und/oder Energie übertragen werden.

Bei Long-Range-Systemen können Reichweiten von 1 m bis 10 m Entfernung zwischen Transponder und Auswertegerät erzielt werden. In Long-Range-Systemen ist der Dipol als Dipol-Antenne ausgebildet und wird mit sehr hohen Frequenzen betrieben, die derzeit in Europa bei etwa 2,45 GHz bzw. 5,8 GHz liegen. Hierbei wird über ein Auswertegerät eine Leistung abgestrahlt, die an den Anschlüssen der Dipol-Antenne des Transponders als HF-Spannung bereitsteht und nach Gleichrichtung zur Versorgung des Chips verwendet wird.

Die Herstellung von extrem dünnen Chips, die mit ebenfalls dünnen Leiterspulen oder Dipolen verbunden werden, ermöglicht das Ausbilden von extrem dünnen Transpondern, sogenannte Smart- bzw. RFID-Label. Viele Anwendungen von RFID-Label machen deren Betrieb auf Metall-Oberflächen sinnvoll. Ein typisches Anwendungsgebiet ist die umfassende Kennzeichnung von Gütern in einem Einkaufskorb im Supermarkt. Die Durchgängigkeit einer solchen Kennzeichnung ist trotz der logistischen Vorteile nur sinnvoll und gerechtfertigt, wenn möglichst alle Güter damit ausgezeichnet werden, also auch metallische Gegenstände wie Konservendosen, und vor allem auch Gebinde, die eine metallisierte Folie enthalten.

Allerdings ist die Montage eines Transponders, beispielsweise mit einer hochfrequenten Leiterschleife, unmittelbar auf einer metallischen Oberfläche nicht ohne weiteres möglich. Der magnetische Wechsel-Fluss durch die Metalloberfläche induziert in der Leiterschleife Wirbelströme, die der Ursache, also dem Feld der Leiterschleife entgegenwirken und damit das magnetische Feld an der Oberfläche so stark dämpfen, dass eine Energieversorgung und Datenübertragung des Chips des Transponders nicht mehr möglich sind.

Durch das Einfügen hochpermeabler Materialien, wie Ferrite, zwischen Leiterschleife und Metalloberfläche, kann das Auftreten von Wirbelströmen reduziert und weitgehend vermieden werden. Eine magnetisch hochpermeable Schicht zwischen Leiterschleife und Metallunterlage führt die Feldlinien entsprechend ihrer magnetischen Leitfähigkeit näher an der Leiterschleife; weniger Feldlinien dringen in das unterliegende Metall ein, und dementsprechend weniger Wirbelströme werden induziert. Allerdings verändert sich dadurch die Induktivität der Leiterschleife, und der Schwingkreis wird verstimmt, so dass die Resonanzfrequenz erniedrigt wird. Prinzipiell erhöhen ferromagnetische Materialien die Selbstinduktivität, nichtferromagnetische Metalle erniedrigen sie. In beiden Fällen ändert sich die Resonanzfrequenz.

Die Abschirmung hochfrequenter Felder ist ein in der Technik allgemein auftretendes Problem, das im Falle der RFID-Technik eine Besonderheit aufweist: Bei RFID-Systemen ist die Position des abzuschirmenden oder genauer zu führenden elektrischen und magnetischen Feldes bekannt, weil sie durch die Geometrie der in unmittelbarer Nähe zur metallischen Unterlage angeordneten Antennenstruktur definiert ist.

Zur Abschirmung sind derzeit Ferritfolien gebräuchlich. Diese Folien enthalten Ferrit-Partikel mit Abmessungen im µm-Bereich, die in Polymere eingebettet und somit elektrisch voneinander isoliert sind. Trotz der hohen Permeabilität der Einzelpartikel ergibt sich aufgrund der vielen "Luftspalte" zwischen den Partikeln eine nur geringe Gesamt-Permeabilität von typisch nahe 10. Eine Permeabilität von 10 bedeutet eine effektive Verkürzung der Weglänge der magnetischen Feldlinien um einen Faktor von ca. 3; der geometrische Abstand zwischen RFID-Label und Metallunterlage kann bei ansonsten gleicher Wirkung um diesen Faktor reduziert werden.

Höhere Werte lassen sich durch kompakte magnetische Leiter, etwa Schichten oder kompakte Folien hochpermeabler Metalle erreichen. Zur Unterdrückung der oben erwähnten Wirbelströme müssen diese magnetischen Leiter derart strukturiert sein, dass sie einen Stromfluss in Richtung des induzierten elektrischen Feldes unterbinden. Derartige Wirbelströme entziehen dem Feld Energie, wodurch zum einen die übertragbare Nutzenergie sinkt und zum anderen der Antennenkreis, mit nachteiligen Effekten auf die Datenübertragung, gedämpft wird. Ähnliches ist aus der Elektrotechnik, beispielsweise bei gegenseitig isolierten Lamellen-Blechen an Transformatoren, bekannt.

Die US 4,486,731 beschreibt eine Spulenanordnung mit reduzierter Anisotropie für ein Kommunikationssystem, in welchem die räumliche Orientierung der Spulenanordnung nicht vorher festgelegt werden kann. Die Spulenanordnung beinhaltet eine Flachspule mit einer oder mehreren Bindungen, sowie einen oder mehrere Streifen aus magnetisch permeablen Material. Befindet sich die Spulenanordnung in einem Magnetfeld, wobei die Feldrichtung senkrecht zur Spulenebene ist, haben die permeablen Streifen einen vernachlässigenden Effekt. Ist die Spulenanordnung parallel zu den magnetischen Flusslinien, wird der Fluss durch die Streifen umgeleitet und durch die Spulenebene geführt. Die Anordnung der permeablen Streifen ist derart, dass sich ein Streifen auf der einen Seite der Spulenebene, der andere Streifen auf der anderen Seite der Spulenebene befindet. Eine derartige Anordnung der permeablen Streifen hat den Zweck, dass sich eine Flusslinie des Magnetfeldes, welche sich auf der einen Seite der Spulenebene befindet, durch den ersten Streifen geführt wird, die Spulenebene durchtritt, und dann weiterhin durch den zweiten Streifen geführt wird.

Die GB 1 331 604 A beschreibt die Herstellung einer Karte, die eine Schicht trägt, welche nadelförmige, magnetische Partikel enthält. Diese Schicht wird in flüssigem Zustand aufgetragen, die magnetischen Partikel werden ausgerichtet, danach wird die Schicht ausgehärtet, wobei die magnetischen Partikel ihre jeweilige Ausrichtung beibehalten.

Ausgehend von dem bekannten Stand der Technik liegt der vorliegenden Erfindung die Aufgabe zugrunde, eine Möglichkeit zu schaffen, die einen Betrieb eines RFID-Systems auf einer Metallumgebung in möglichst störungsfreier Weise gestattet.

Diese Aufgabe wird durch die Gegenstände der unabhängigen Patentansprüche gelöst. Bevorzugte Ausgestaltungen der Erfindung sind Gegenstand der Unteransprüche.

Insbesondere wird die Aufgabe der vorliegenden Erfindung durch eine Einrichtung zum Abschirmen eines Transponders, der zumindest einen Chip und eine Antennenstruktur mit einer anwendungsspezifischen räumlichen Ausdehnung aufweist und auf einer elektrisch leitfähigen Oberfläche befestigt ist, gelöst.

Diese Einrichtung umfasst gemäß einem Aspekt der vorliegenden Erfindung eine Folie, auf oder in der zumindest in einem Bereich, der die räumliche Ausdehnung der Antennenstruktur des Transponders aufweist, ein hochpermeables Material ausgebildet ist. Das hochpermeable Material ist derart in längliche Abschirmelemente und Freiräume, die jeweils zwischen den Abschirmelementen angeordnet sind, unterteilt, dass die Abschirmelemente nach einem Befestigen des Substrats an dem Transponder parallel zu einem in der Antennenstruktur des Transponders induzierten, magnetischen Feld stehen, um Wirbelströme zu unterdrücken, die beim Einbringen des Transponders in ein Magnetfeld eines entsprechenden Lesegeräts von der elektrisch leitfähigen Oberfläche in der Antennenstruktur erzeugt werden.

Gemäß einem anderen Aspekt der vorliegenden Erfindung umfasst diese Einrichtung ein Substrat, auf dem eine Vielzahl von fixierten ferromagnetischen Partikeln in einem Bereich ausgebildet ist, der zumindest die räumliche Ausdehnung der Antennenstruktur des Transponders aufweist. Die ferromagnetischen Partikel sind jeweils derart ausgerichtet, dass sie nach einem Befestigen des Substrats an dem Transponder parallel zu einem in der Antennenstruktur des Transponders induzierten, magnetischen Feld stehen, um Wirbelströme zu unterdrücken, die beim Einbringen des Transponders in ein Magnetfeld eines entsprechenden Lesegeräts von der elektrisch leitfähigen Oberfläche in der Antennenstruktur erzeugt werden.

Ein Vorteil der erfindungsgemäßen Einrichtung besteht darin, dass die Folie oder das Substrat, die bzw. das als abschirmende Schicht ausgebildet wird, relativ dünn ausgeführt werden kann. Somit ist die abschirmende Schicht preiswert, und kann darüber hinaus unbedenklich hinsichtlich ihrer Entsorgung, also hinsichtlich Wederverwertung und Deponierbarkeit, ausgeführt sein. Ein weiterer Vorteil ist die einfache Verarbeitung: eine abschirmende Schicht, die dünn ist und beispielsweise als Folie gefertigt wird, kann mittels Prozessen aus der Papierverarbeitung behandelt werden. Dadurch ist eine problemlose Verarbeitung zu Smart Labels möglich.

Das erfindungsgemäße Substrat weist vorzugsweise auf seiner Vorder- und Rückseite ferromagnetische Partikel auf und ist aus einem elektrisch nicht-leitfähigen Material ausgeführt, beispielsweise einem organischen Polymer. Des weiteren kann das Substrat aus Papier ausgeführt sein.

Insbesondere kann das Substrat einen Transponder oder ein Inlay für einen Transponder repräsentieren.

Die Antennenstruktur repräsentiert bevorzugterweise eine Antennenspule oder einen geschlossenen oder offenen Dipol, beispielsweise eine Schlitzantenne.

Die ferromagnetischen Partikel bestehen beispielsweise aus Eisen und gehören bevorzugterweise der Stoffgruppe der Granate (Yttrium-Aluminium-Verbindungen) an.

Des weiteren wird die Aufgabe der vorliegenden Erfindung durch ein Verfahren zum Herstellen einer Abschirmung für einen Transponder, der zumindest einen Chip und eine Antennenstruktur mit einer anwendungsspezifischen räumlichen Ausdehnung aufweist, wobei die Abschirmung auf einem Substrat ausgebildet wird, gelöst. Das Verfahren umfasst folgende Schritte: Aufbringen von ferromagnetischen Partikeln auf einen Bereich des Substrats, der zumindest die räumliche Ausdehnung der Antennenstruktur des Transponders aufweist; Ausrichten der ferromagnetischen Partikel mittels eines magnetischen Gleichfeldes derart, dass die Partikel nach einem Befestigen des Substrats an dem Transponder parallel zu einem in der Antennenstruktur des Transponders induzierten, magnetischen Feld stehen; und Fixieren der ausgerichteten Partikel.

Das Ausrichten der ferromagnetischen Partikel erfolgt beispielsweise mittels eines oder mehrerer Permanentmagnete oder mittels eines oder mehrerer elektrisch erregter Magnete mit einem magnetischen Gleichfeld.

Das Fixieren der ausgerichteten Partikel kann mittels eines Klebers erfolgen, wobei das Aufbringen der ferromagnetischen Partikel vorzugsweise zusammen mit dem Kleber erfolgt und das Fixieren während oder unmittelbar nach dem Ausrichten der ferromagnetischen Partikel erfolgt.

Des weiteren können die ferromagnetischen Partikel in einem Lack enthalten sein, der auf das Substrat aufgebracht wird. In diesem Fall erfolgt das Fixieren der ausgerichteten Partikel vorzugsweise mittels thermischer Lacktrocknung und -härtung.

Die ferromagnetischen Partikel werden beispielsweise aus weichmagnetischem Eisen oder einem ähnlich wirkenden Ferroelektrikum oder einer entsprechend wirkenden Legierung oder Mischung ausgeführt.

Die ferromagnetischen Partikel weisen vorzugsweise jeweils eine Längsabmessung auf, die vergleichbar der Breite des induzierten magnetischen Feldes ist, z.B. 1/20 bis 1/5 der Breite des induzierten magnetischen Feldes.

Bevorzugterweise sind die ferromagnetischen Partikel hochpermeabel und länglich ausgeführt und weisen jeweils annähernd eine Länge von 300 µm, eine Breite von 50 µm und eine Dicke von 10 µm auf.

Das erfindungsgemäße Substrat kann nach dem Fixieren der ferromagnetischen Partikel auf den Transponder aufgebracht werden. Des weiteren kann der Transponder vor dem Herstellen der Abschirmung auf dem Substrat ausgebildet werden.

Bevorzugte Ausführungen der vorliegenden Erfindung werden im folgenden unter Bezugnahme auf die beiliegenden Zeichnungen näher erläutert. Dabei zeigen die Zeichnungen im einzelnen:
Fig. 1 eine Einrichtung zum Abschirmen eines Transponders gemäß einem ersten Aspekt der vorliegenden Erfindung;
Fig. 2 eine schematische Ansicht der auszuführenden Schritte in einem Verfahren zum Herstellen einer Abschirmung für einen Transponder gemäß dem ersten Aspekt der vorliegenden Erfindung;
Fig. 3 eine Einrichtung zum Abschirmen eines Transponders gemäß einem zweiten Aspekt der vorliegenden Erfindung; und
Fig. 4 eine Einrichtung zum Abschirmen eines Transponders gemäß einem dritten Aspekt der vorliegenden Erfindung.

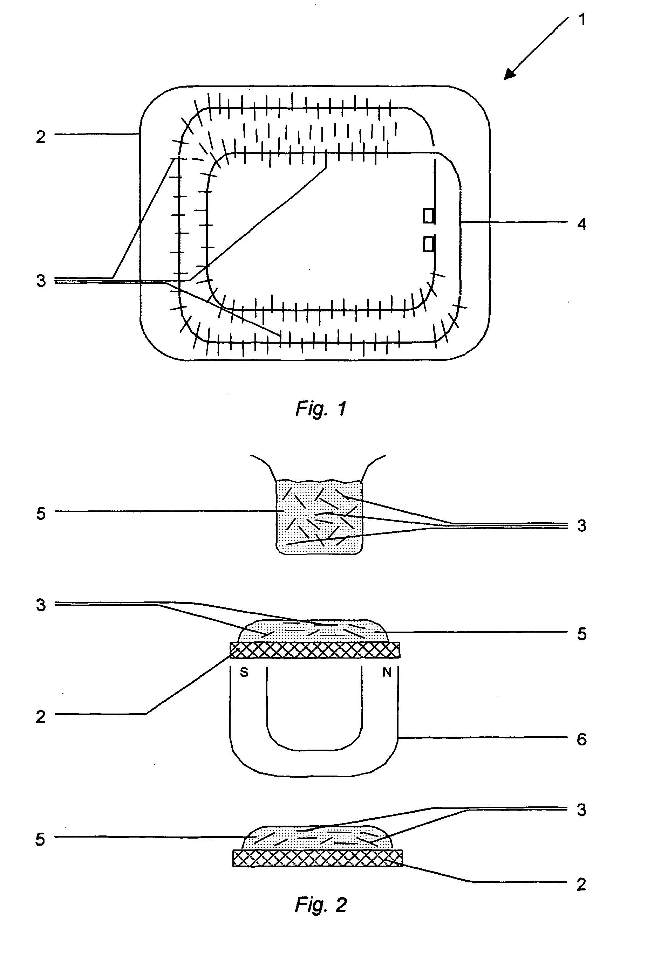

Fig. 1 zeigt eine Einrichtung 1 zum Abschirmen eines Transponders, der zumindest einen Chip und eine Antennenstruktur 4 mit einer anwendungsspezifischen räumlichen Ausdehnung aufweist und auf einer elektrisch leitfähigen Oberfläche befestigt wird, gemäß einem ersten Aspekt der vorliegenden Erfindung. Die in Fig. 1 gezeigte Antennenstruktur 4 repräsentiert eine Leiterschleife bzw. Antennenspule.

Die Einrichtung 1 umfasst ein Substrat 2, auf dem eine Vielzahl von fixierten ferromagnetischen Partikeln 3 in einem Bereich ausgebildet ist, der zumindest die räumliche Ausdehnung der Antennenstruktur 4 des Transponders aufweist.

Die Antennenstruktur 4 des Transponders ist in Fig. 1 lediglich zur Verdeutlichung dieses Bereichs auf dem Substrat 2 abgebildet, aber beim Herstellen der Abschirmung selbst nicht sichtbar für den Fall, dass der Transponder nicht auf dem Substrat 2 ausgebildet ist.

Die ferromagnetischen Partikel 3 sind jeweils derart ausgerichtet, dass sie nach einem Befestigen des Substrats 2 an dem Transponder parallel zu einem in der Antennenstruktur 4 des Transponders induzierten, magnetischen Feld stehen, um Wirbelströme zu unterdrücken, die beim Einbringen des Transponders in ein Magnetfeld eines entsprechenden Lesegeräts von der elektrisch leitfähigen Oberfläche in der Antennenstruktur 4 erzeugt werden.

Das Substrat 2 weist vorzugsweise auf seiner Vorder- und Rückseite ferromagnetische Partikel 3 auf und kann aus einem elektrisch nicht-leitfähigen Material ausgeführt sein, beispielsweise einem organischen Polymer. Insbesondere kann das Substrat 2 aus Papier ausgeführt sein. Des weiteren kann das Substrat 2 einen Transponder oder ein Inlay für einen Transponder repräsentieren. Der Vorteil der Applizierung des ferromagnetischen Materials auf Vorder- und Rückseite liegt in dem Erhalt einer geschlossenen Fläche (in der zur Hauptfläche senkrechten Projektion) und einer dadurch bewirkten vollständigen Unterdrückung der Wirbelstromverluste.

Die ferromagnetischen Partikel 3 bestehen beispielsweise aus Eisen oder einer ähnlich wirkenden Legierung oder sie gehören bevorzugterweise für höhere Frequenzen der Stoffgruppe der Granate (Yttrium-Aluminium-Verbindungen) an.

Fig. 2 zeigt eine schematische Ansicht der auszuführenden Schritte in einem Verfahren zum Herstellen einer Abschirmung für einen Transponder, der zumindest einen Chip und eine Antennenstruktur mit einer anwendungsspezifischen räumlichen Ausdehnung aufweist, wobei die Abschirmung auf einem Substrat ausgebildet wird, gemäß dem ersten Aspekt der vorliegenden Erfindung.

In einem ersten Schritt erfolgt ein Aufbringen von ferromagnetischen Partikeln 3 auf einen Bereich des Substrats 2, der zumindest die räumliche Ausdehnung der Antennenstruktur des Transponders aufweist. Das Aufbringen erfolgt bevorzugterweise mittels eines Lacks 5 mit einer geeigneten Viskosität, der suspendierte ferromagnetische Partikel 3 enthält.

Die ferromagnetischen Partikel 3 werden beispielsweise aus weichmagnetischem Eisen oder einem ähnlich wirkenden Ferroelektrikum oder einer entsprechend wirkenden Legierung oder Mischung ausgeführt. Die ferromagnetischen Partikel 3 weisen vorzugsweise jeweils eine Längsabmessung auf, die vergleichbar der Breite des induzierten magnetischen Feldes ist, z.B. 1/20 bis 1/5 der Breite des induzierten magnetischen Feldes. Bevorzugterweise sind die ferromagnetischen Partikel 3 hochpermeabel und länglich ausgeführt und weisen jeweils eine Länge von ca. 50 bis 500, vorzugsweise 300 µm, eine Breite von 10 bis 60 µm und eine Dicke von 10 bis 60 µm auf.

In einem weiteren Schritt erfolgt ein Ausrichten der ferromagnetischen Partikel 3 mittels eines magnetischen Gleichfeldes derart, dass die Partikel 3 nach einem Befestigen des Substrats 2 an dem Transponder parallel zu einem in der Antennenstruktur des Transponders induzierten, magnetischen Feld stehen. Das Ausrichten der ferromagnetischen Partikel erfolgt beispielsweise mittels eines oder mehrerer Permanentmagnete 6 oder mittels eines oder mehrerer elektrisch erregter Magnete mit einem magnetischen Gleichfeld. Insbesondere erfolgt das Ausrichten der Partikel 3 entsprechend der Geometrie der Antennenstruktur durch das magnetische Gleichfeld derart, dass die Partikel entsprechend dem Prinzip der Energie-Minimierung in Feldrichtung ausgerichtet werden.

Das Ausrichten kann ebenfalls nach dem Befestigen des Substrats 2 an dem Transponder erfolgen. Des weiteren kann der Lack 5 zum Herstellen der Abschirmung für den Transponder unmittelbar auf den Transponder aufgebracht werden, sodass ein Ausbilden eines zusätzlichen Substrats 2 als Träger der Abschirmung entfällt.

In einem weiteren Schritt erfolgt ein Fixieren der ausgerichteten Partikel 3 auf dem Substrat 2. Das Fixieren der ausgerichteten Partikel 3 kann mittels eines Klebers erfolgen, wobei das Aufbringen der ferromagnetischen Partikel 3 vorzugsweise zusammen mit dem Kleber erfolgt und das Fixieren während oder unmittelbar nach dem Ausrichten der ferromagnetischen Partikel 3 erfolgt.

Für den Fall, dass die ferromagnetischen Partikel 3 in einem Lack 5 enthalten sind, der auf das Substrat 2 aufgebracht wurde, erfolgt das Fixieren der ausgerichteten Partikel 3 vorzugsweise mittels thermischer Lacktrocknung und -härtung.

Die ferromagnetischen Partikel 3 können auch dadurch aufgebracht werden, indem sie auf das Substrat gestreut werden, anschließend ausgerichtet werden und schließlich fixiert werden.

Eine weitere Möglichkeit besteht darin, den Schritt des Aufbringens und Ausrichtens dadurch zu kombinieren, indem die ferromagnetischen Partikel bereits in der richtigen Ausrichtung ausgestanzt werden und dieses Stanzmuster unverändert auf das Substrat aufgebracht wird.

Schließlich ist es auch möglich, ausgerichtete Muster von ferromagnetischen Partikeln im Wege der Ätztechnik, beispielsweise unter Verwendung photolithograpahischer Verfahren, zu generieren.

Die so hergestellte Abschirmungsschicht kann dann in die Transponderstruktur eingebracht werden. Unter Umständen kann die magnetische Abschirmungsschicht direkt auf Metall platziert werden, für den Fall, dass der magnetische Leiter im Wesentlichen elektrisch isolierend ist. Andernfalls ist darauf zu achten, die Abschirmungsschicht auf einer elektrischen Isolationsschicht aufzubringen. Gemäß einer bevorzugten Ausführungsform wird die Abschirmungsschicht bei der Herstellung des Transponders mit einlaminiert.

Gemäß einem besonders bevorzugten Aspekt der vorliegenden Erfindung wird auf der Vorder- und Rückseite desselben dünnen Substrats 2 jeweils eine Abschirmung bzw. Abschirmungsschicht hergestellt. Das Aufbringen der ferromagnetischen Partikel 3 erfolgt hierbei sequentiell, d.h. in einem ersten Schritt auf der Vorderseite und in einem zweiten Schritt auf der Rückseite. Insbesondere orientiert sich die im zweiten Schritt aufgebrachte Abschirmungsschicht zusätzlich an der bereits vorhandenen ersten, ausgerichteten Abschirmungsschicht und wird vorzugsweise derart ausgerichtet, dass Lücken, die in der ersten Schicht vorhanden sind, abgedeckt werden. Dies kann beispielsweise durch eine geringfügige Schrägstellung des orientierenden magnetischen Gleichfeldes unterstützt werden.

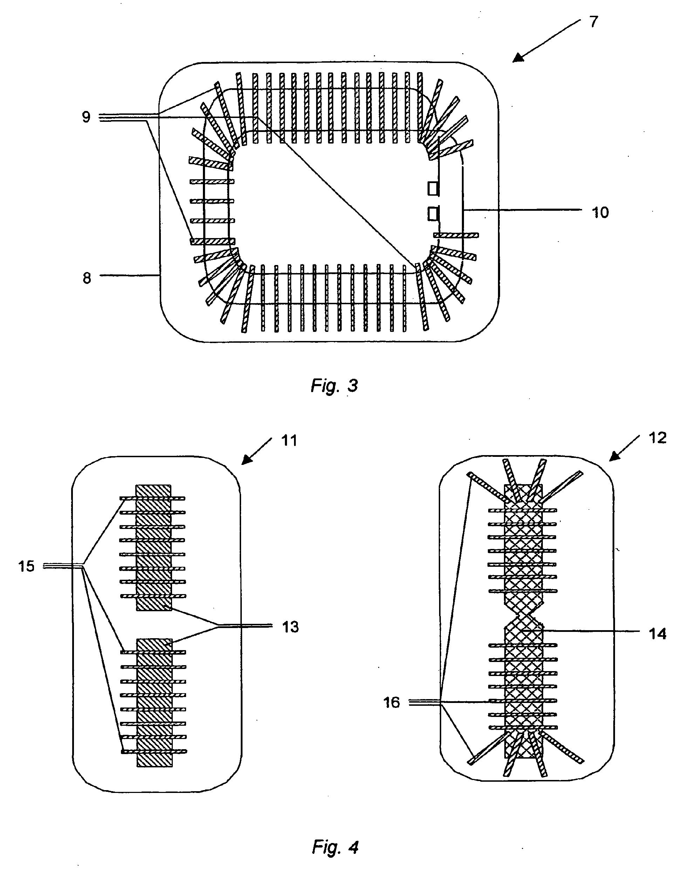

Fig. 3 zeigt eine Einrichtung 7 zum Abschirmen eines Transponders, der zumindest einen Chip und eine Antennenstruktur 10 mit einer anwendungsspezifischen räumlichen Ausdehnung aufweist und auf einer elektrisch leitfähigen Oberfläche befestigt wird, gemäß einem zweiten Aspekt der vorliegenden Erfindung. Die in Fig. 2 gezeigte Antennenstruktur 10 repräsentiert eine Leiterschleife bzw. Antennenspule.

Die Einrichtung 7 umfasst eine Folie 8, auf oder in der zumindest in einem Bereich, der die räumliche Ausdehnung der Antennenstruktur 10 des Transponders aufweist, ein hochpermeables Material ausgebildet ist.

Die Antennenstruktur 10 des Transponders ist in Fig. 1 lediglich zur Verdeutlichung dieses Bereichs auf der Folie 8 abgebildet, aber beim Herstellen der Abschirmung selbst nicht sichtbar für den Fall, dass der Transponder nicht auf der Folie 8 ausgebildet ist.

Das hochpermeable Material ist derart in längliche Abschirmelemente 9 und Freiräume, die jeweils zwischen den Abschirmelementen 9 angeordnet sind, unterteilt, dass die Abschirmelemente 9 nach einem Befestigen des Substrats an dem Transponder parallel zu einem in der Antennenstruktur 10 des Transponders induzierten, magnetischen Feld stehen, um Wirbelströme zu unterdrücken, die beim Einbringen des Transponders in ein Magnetfeld eines entsprechenden Lesegeräts von der elektrisch leitfähigen Oberfläche in der Antennenstruktur 10 erzeugt werden.

Fig. 4 zeigt Einrichtungen 11, 12 zum Abschirmen eines Transponders, der zumindest einen Chip und eine Antennenstruktur 13, 14 mit einer anwendungsspezifischen räumlichen Ausdehnung aufweist und auf einer elektrisch leitfähigen Oberfläche befestigt wird, gemäß einem dritten Aspekt der vorliegenden Erfindung.

Die Antennenstruktur 13, 14 repräsentiert eine Dipol-Antenne, die hier als offener Dipol dargestellt ist. Aus Gründen der Impedanz und Störsicherheit kann jedoch auch eine sogenannte Schlitzantenne zum Einsatz kommen.

d.h. einen geschlossenen oder offenen Dipol, beispielsweise eine sog. Schlitzantenne.

Da die Richtung eines abzuschirmenden Feldes auch hier bekannt und durch die Dipol-Antenne 13, 14 vorgegeben ist, können auch hier entsprechende ferromagnetische Partikel oder Abschirmelemente 15, 16 geeignet ausgerichtet werden, d.h. senkrecht zur Dipol-Ausrichtung und senkrecht zur Einstrahlrichtung.

Aus Gründen der Wellenwiderstand-Anpassung und des Antennen-Gewinns werden im GHz-Bereich vorzugsweise Schlitzantennen 14 eingesetzt. Auch diese Antennen können in ihrer magnetischen Feldkomponente abgeschirmt werden. Geometrisch ähnelt hier das Muster der strukturierten Abschirmung einem großflächigen, offenen Dipol.

Als Materialien für eine Abschirmung im oberen MHz und GHz-Bereich werden bevorzugterweise die aus der militärischen "Stealth-Technik" bekannten Substanzen auf der Basis von Aluminium-Eisen-Granat und analogen Legierungen verwendet.

## Patentansprüche

1. Transponderabschirmungsherstellungsverfahren zum Herstellen einer Abschirmung für einen Transponder, der zumindest einen Chip und eine Antennenstruktur mit einer anwendungsspezifischen räumlichen Ausdehnung aufweist, wobei die Abschirmung auf einem Substrat ausgebildet wird und wobei das Verfahren umfasst:
Aufbringen von ferromagnetischen Partikeln auf einen Bereich des Substrats, der zumindest die räumliche Ausdehnung der Antennenstruktur des Transponders aufweist;
Ausrichten der ferromagnetischen Partikel mittels eines magnetischen Gleichfeldes derart, dass die Partikel nach einem Befestigen des Substrats an dem Transponder jeweils parallel zu dem am jeweiligen Ort des Partikels von der Antennenstruktur des Transponders induzierten, magnetischem Feld stehen; und
Fixieren der ausgerichteten Partikel.

2. Transponderabschirmungsherstellungsverfahren nach Anspruch 1, wobei das Ausrichten der ferromagnetischen Partikel mittels eines oder mehrerer Permanentmagnete erfolgt.

3. Transponderabschirmungsherstellungsverfahren nach Anspruch 1, wobei das Ausrichten der ferromagnetischen Partikel mittels eines oder mehrerer elektrisch erregter Magnete mit einem magnetischen Gleichfeld erfolgt.

4. Transponderabschirmungsherstellungsverfahren nach einem der Ansprüche 1 bis 3, wobei das Fixieren der ausgerichteten Partikel mittels eines Klebers erfolgt.

5. Transponderabschirmungsherstellungsverfahren nach Anspruch 4, wobei das Aufbringen der ferromagnetischen Partikel zusammen mit dem Kleber erfolgt und das Fixieren während oder unmittelbar nach dem Ausrichten der ferromagnetischen Partikel erfolgt.

6. Transponderabschirmungsherstellungsverfahren nach einem der Ansprüche 1 bis 3, wobei die ferromagnetischen Partikel in einem Lack enthalten sind, der auf das Substrat aufgebracht wird.

7. Transponderabschirmungsherstellungsverfahren nach Anspruche 6, wobei das Fixieren der ausgerichteten Partikel mittels thermischer Lacktrocknung und -härtung erfolgt.

8. Transponderabschirmungsherstellungsverfahren nach einem der Ansprüche 1 bis 7, wobei die ferromagnetischen Partikel hochpermeabel und länglich ausgeführt sind.

9. Transponderabschirmungsherstellungsverfahren nach Anspruch 8, wobei die ferromagnetischen Partikel jeweils annähernd eine Länge von 300 µm, eine Breite von 50 µm und eine Dicke von 10 µm aufweisen.

10. Transponderabschirmungsherstellungsverfahren nach einem der Ansprüche 1 bis 9, wobei die ferromagnetischen Partikel aus weichmagnetischem Eisen oder einem ähnlich wirkenden Ferroelektrikum oder einer entsprechend wirkenden Legierung oder Mischung ausgeführt sind.

11. Transponderabschirmungsherstellungsverfahren nach einem der Ansprüche 1 bis 10, wobei das Substrat nach dem Fixieren der ferromagnetischen Partikel auf den Transponder aufgebracht wird.

12. Transponderabschirmungsherstellungsverfahren nach einem der Ansprüche 1 bis 10, wobei der Transponder vor dem Herstellen der Abschirmung auf dem Substrat ausgebildet wird.

13. Transponderabschirmungsherstellungsverfahren nach einem der Ansprüche 1 bis 12, wobei das Aufbringen der ferromagnetischen Partikel drucktechnisch erfolgt.

14. Transponderabschirmungsherstellungsverfahren nach einem der Ansprüche 1 bis 13, wobei die Zusammenführung der abschirmenden Schicht und der Antenne mittels Falten oder Laminieren erfolgt.

15. Transponderabschirmungseinrichtung zum Abschirmen eines Transponders, der zumindest einen Chip und eine Antennenstruktur mit einer anwendungsspezifischen räumlichen Ausdehnung aufweist und auf einer elektrisch leitfähigen Oberfläche befestigt ist, mit:
einem Substrat, auf dem eine Vielzahl von fixierten ferromagnetischen Partikeln in einem Bereich ausgebildet ist, der zumindest die räumliche Ausdehnung der Antennenstruktur des Transponders aufweist; wobei
die ferromagnetischen Partikel jeweils derart ausgerichtet sind, dass sie nach einem Befestigen des Substrats an dem Transponder
jeweils parallel zu dem am jeweiligen Ort des Partikels von der Antennenstruktur des Transponders induzierten, magnetischem Feld stehen, um Wirbelströme zu unterdrücken, die beim Einbringen des Transponders in ein Magnetfeld eines entsprechenden Lesegeräts von der elektrisch leitfähigen Oberflache in der Antennenstruktur erzeugt werden.

16. Transponderabschirmungseinrichtung nach Anspruch 15, wobei das Substrat auf seiner Vorder- und Rückseite ferromagnetische Partikel aufweist.

17. Transponderabschirmungseinrichtung nach einem der Ansprüche 15 oder 16, wobei mehrere ferromagnetischen Schichten übereinander, jedoch getrennt durch Isolatoren, vorhanden sind.

18. Transponderabschirmungseinrichtung nach einem der Ansprüche 15 bis 17, wobei das Substrat aus einem elektrisch nicht-leitfähigen Material ausgeführt ist.

19. Transponderabschirmungseinrichtung nach Anspruch 18, wobei das Substrat aus einem organischen Polymer ausgeführt ist.

20. Transponderabschirmungseinrichtung nach einem der Ansprüche 15 bis 18 wobei das Substrat aus Papier ausgeführt ist.

21. Transponderabschirmungseinrichtung nach Anspruch 19 oder 20, wobei das Substrat einen Transponder oder ein Inlay für einen Transponder repräsentiert.

22. Transponderabschirmungseinrichtung nach einem der Ansprüche 15 bis 21, wobei die Antennenstruktur eine Antennenspule repräsentiert.

23. Transponderabschirmungseinrichtung nach einem der Ansprüche 15 bis 21, wobei die Antennenstruktur einen geschlossenen oder offenen Dipol repräsentiert.

24. Transponderabschirmungseinrichtung nach Anspruch 23, wobei die Antennenstruktur eine Schlitzantenne repräsentiert.

25. Transponderabschirmungseinrichtung nach einem der Ansprüche 15 bis 24, wobei die ferromagnetischen Partikel aus Eisen bestehen.

26. Transponderabschirmungseinrichtung nach einem der Ansprüche 15 bis 24, wobei die ferromagnetischen Partikel der Stoffgruppe der Yttrium-Aluminium-Granate angehören.

27. Transponderabschirmungseinrichtung nach Anspruch 15, wobei ein hochpermeables Material, das die ferromagnetischen Partikel enthält, auf einer Folie oder zumindest im Bereich einer Folie, der die räumliche Ausdehnung der Antennenstruktur des Transponders aufweist, ausgebildet ist; und
wobei das hochpermeable Material in längliche Abschirmelemente und Freiräume, die jeweils zwischen den Abschirmelementen angeordnet sind, unterteilt ist und die Abschirmelemente im Wesentlichen parallel zueinander angeordnet sind.

28. Transponder, der zumindest einen Chip und eine Antennenstruktur aufweist und auf einer elektrisch leitfähigen Oberfläche befestigt ist, wobei zwischen dem Transponder und der elektrisch leitfähigen Oberfläche mindestens eine Einrichtung nach einem der Ansprüche 15 bis 26 angebracht ist.

## Claims

1. Transponder shielding production method for producing shielding for a transponder which comprises at least a chip and an antenna structure having application-specific spatial dimensions, wherein the shielding is formed on a substrate and wherein the method comprises:
applying ferromagnetic particles to a region of the substrate having at least the spatial dimensions of the antenna structure of the transponder;
orientating the ferromagnetic particles using a constant magnetic field, in such a way that once the substrate has been affixed to the transponder, the particles will in each case be orientated parallel to the magnetic field induced by the antenna structure of the transponder at the respective position of the particle; and
fixing the orientated particles.

2. Transponder shielding production method according to claim 1, wherein the ferromagnetic particles are orientated by one or more permanent magnets.

3. Transponder shielding production method according to claim 1, wherein the ferromagnetic particles are orientated by one or more electrically excited magnets having a constant magnetic field.

4. Transponder shielding production method according to any one of claims 1 to 3, wherein the orientated particles are fixed using an adhesive.

5. Transponder shielding production method according to claim 4, wherein the ferromagnetic particles are applied together with the adhesive and the fixing takes place during or immediately after the orientation of the ferromagnetic particles.

6. Transponder shielding production method according to any one of claims 1 to 3, wherein the ferromagnetic particles are contained in a lacquer which is applied to the substrate.

7. Transponder shielding production method according to claim 6, wherein the orientated particles are fixed by thermally drying and curing the lacquer.

8. Transponder shielding production method according to any one of claims 1 to 7, wherein the ferromagnetic particles are highly permeable and elongate.

9. Transponder shielding production method according to claim 8, wherein the ferromagnetic particles each have a length of about 300 µm, a width of about 50 µm, and a thickness of about 10 µm.

10. Transponder shielding production method according to any one of claims 1 to 9, wherein the ferromagnetic particles are made of soft-magnetic iron or of a similarly acting ferroelectric material or of an equivalently acting alloy or mixture.

11. Transponder shielding production method according to any one of claims 1 to 10, wherein the substrate is applied to the transponder after the ferromagnetic particles have been fixed.

12. Transponder shielding production method according to any one of claims 1 to 10, wherein the transponder is formed before producing the shielding on the substrate.

13. Transponder shielding production method according to any one of claims 1 to 12, wherein the ferromagnetic particles are applied by a printing technique.

14. Transponder shielding production method according to any one of claims 1 to 13, wherein the shielding layer and the antenna are combined by folding or laminating.

15. Transponder shielding device for shielding a transponder which comprises at least a chip and an antenna structure having application-specific spatial dimensions and which is affixed to an electrically conductive surface, said device comprising:
a substrate on which a plurality of fixed ferromagnetic particles are formed in an area having at least the spatial dimensions of the antenna structure of the transponder; wherein
the ferromagnetic particles are in each case orientated in such a way that once the substrate has been affixed to the transponder, the ferromagnetic particles will in each case be orientated parallel to the magnetic field induced by the antenna structure of the transponder at the respective position of the particle, so as to suppress eddy currents which are generated by the electrically conductive surface in the antenna structure when the transponder is introduced into a magnetic field of a corresponding reading device.

16. Transponder shielding device according to claim 15, wherein the substrate comprises ferromagnetic particles on the front face and on the rear face.

17. Transponder shielding device according to either claim 15 or claim 16, wherein a plurality of ferromagnetic layers are provided on top of one another, but are separated by insulators.

18. Transponder shielding device according to any one of claims 15 to 17, wherein the substrate is made of an electrically non-conductive material.

19. Transponder shielding device according to claim 18, wherein the substrate is made of an organic polymer.

20. Transponder shielding device according to any one of claims 15 to 18, wherein the substrate is made of paper.

21. Transponder shielding device according to either claim 19 or claim 20, wherein the substrate represents a transponder or an inlay for a transponder.

22. Transponder shielding device according to any one of claims 15 to 21, wherein the antenna structure represents an antenna coil.

23. Transponder shielding device according to any one of claims 15 to 21, wherein the antenna structure represents a closed or open dipole.

24. Transponder shielding device according to claim 23, wherein the antenna structure represents a slot antenna.

25. Transponder shielding device according to any one of claims 15 to 24, wherein the ferromagnetic particles consist of iron.

26. Transponder shielding device according to any one of claims 15 to 24, wherein the ferromagnetic particles belong to the substance group consisting of the yttrium aluminium garnets.

27. Transponder shielding device according to claim 15, wherein a highly permeable material which contains the ferromagnetic particles is formed on a film or at least in the region of a film having the spatial dimensions of the antenna structure of the transponder; and
wherein the highly permeable material is subdivided into elongate shielding members and free spaces, which are arranged between the shielding members in each case, and the shielding members are arranged substantially mutually parallel.

28. Transponder which comprises at least a chip and an antenna structure and which is affixed to an electrically conductive surface, wherein at least one device according to any one of claims 15 to 26 is attached between the transponder and the electrically conductive surface.

## Revendications

1. Procédé de fabrication d'un blindage de transpondeur pour la fabrication d'un blindage pour un transpondeur qui présente au moins une puce et une structure d'antenne avec une extension spatiale spécifique à l'utilisation, le blindage étant constitué sur un substrat, et le procédé comprenant :
l'application de particules ferromagnétiques sur une zone du substrat qui présente au moins l'extension spatiale de la structure d'antenne du transpondeur;
l'orientation des particules ferromagnétiques au moyen d'un champ continu magnétique de sorte que, après une fixation du substrat sur le transpondeur, les particules sont chacune parallèles au champ magnétique induit par la structure d'antenne du transpondeur à l'emplacement respectif de la particule ; et
la fixation des particules orientées.

2. Procédé de fabrication d'un blindage de transpondeur selon la revendication 1, l'orientation des particules ferromagnétiques s'effectuant au moyen d'un ou de plusieurs aimants permanents.

3. Procédé de fabrication d'un blindage de transpondeur selon la revendication 1, l'orientation des particules ferromagnétiques s'effectuant au moyen d'un ou de plusieurs aimants excités électriquement, avec un champ magnétique continu.

4. Procédé de fabrication d'un blindage de transpondeur selon l'une des revendications 1 à 3, la fixation des particules orientées s'effectuant au moyen d'un adhésif.

5. Procédé de fabrication d'un blindage de transpondeur selon la revendication 4, l'application des particules ferromagnétiques s'effectuant avec l'adhésif, et la fixation s'effectuant pendant ou tout de suite après l'orientation des particules ferromagnétiques.

6. Procédé de fabrication d'un blindage de transpondeur selon l'une des revendications 1 à 3, les particules ferromagnétiques étant contenues dans un vernis qui est appliqué sur le substrat.

7. Procédé de fabrication d'un blindage de transpondeur selon la revendication 6, la fixation des particules orientées s'effectuant au moyen d'un séchage ou d'un durcissement thermique de vernis.

8. Procédé de fabrication d'un blindage de transpondeur selon l'une des revendications 1 à 7, les particules ferromagnétiques étant réalisées de façon à être oblongues et très perméables.

9. Procédé de fabrication d'un blindage de transpondeur selon la revendication 8, les particules ferromagnétiques présentant respectivement approximativement une longueur de 300 µm, une largeur de 50 µm et une épaisseur de 10 µm.

10. Procédé de fabrication d'un blindage de transpondeur selon l'une des revendications 1 à 9, les particules ferromagnétiques étant réalisées en fer magnétique doux ou en ferroélectrique agissant de façon similaire ou en alliage ou mélange agissant de façon correspondante.

11. Procédé de fabrication d'un blindage de transpondeur selon l'une des revendications 1 à 10, le substrat étant appliqué après la fixation des particules ferromagnétiques sur le transpondeur.

12. Procédé de fabrication d'un blindage de transpondeur selon l'une des revendications 1 à 10, le transpondeur étant constitué avant la fabrication du blindage sur le substrat.

13. Procédé de fabrication d'un blindage de transpondeur selon l'une des revendications 1 à 12, l'application des particules ferromagnétiques s'effectuant par une technique de compression.

14. Procédé de fabrication d'un blindage de transpondeur selon l'une des revendications 1 à 13, la réunion de la couche de blindage et de l'antenne s'effectuant par pliage ou par stratification.

15. Equipement de blindage de transpondeur pour le blindage d'un transpondeur, qui présente au moins une puce et une structure d'antenne avec une extension spatiale spécifique à l'utilisation et qui est fixé sur une surface électriquement conductrice, avec :
un substrat sur lequel une multiplicité de particules ferromagnétiques fixées est constituée dans une zone qui présente au moins une extension spatiale spécifique à l'utilisation de la structure d'antenne du transpondeur ;
les particules ferromagnétiques étant chacune orientées de sorte que, après une fixation du substrat sur le transpondeur, elles sont respectivement parallèles au champ magnétique induit à l'emplacement respectif de la particule par la structure d'antenne du transpondeur afin de supprimer des courants parasites qui sont produits dans la structure d'antenne par la surface électriquement conductrice lors de l'introduction du transpondeur dans un champ magnétique d'un lecteur correspondant.

16. Equipement de blindage de transpondeur selon la revendication 15, le substrat présentant des particules ferromagnétiques sur son côté avant et son côté arrière.

17. Equipement de blindage de transpondeur selon l'une des revendications 15 ou 16, plusieurs couches ferromagnétiques étant présentes les unes sur les autres mais séparées par des isolateurs.

18. Equipement de blindage de transpondeur selon l'une des revendications 15 à 17, le substrat étant réalisé en matériau non électriquement conducteur.

19. Equipement de blindage de transpondeur selon la revendication 18, le substrat étant réalisé en polymère organique.

20. Equipement de blindage de transpondeur selon l'une des revendications 15 à 18, le substrat étant réalisé en papier.

21. Equipement de blindage de transpondeur selon la revendication 19 ou 20, le substrat représentant un transpondeur ou une incrustation pour un transpondeur.

22. Equipement de blindage de transpondeur selon l'une des revendications 15 à 21, la structure d'antenne représentant une bobine-antenne.

23. Equipement de blindage de transpondeur selon l'une des revendications 15 à 21, la structure d'antenne représentant un dipôle fermé ou ouvert.

24. Equipement de blindage de transpondeur selon la revendication 23, la structure d'antenne représentant une antenne fendue.

25. Equipement de blindage de transpondeur selon l'une des revendications 15 à 24, les particules ferromagnétiques étant en fer.

26. Equipement de blindage de transpondeur selon l'une des revendications 15 à 24, les particules ferromagnétiques appartenant au groupe de matière des grenats d'yttrium et d'aluminium.

27. Equipement de blindage de transpondeur selon la revendication 15, un matériau très perméable qui contient des particules ferromagnétiques étant constitué sur une feuille ou au moins dans la zone d'une feuille qui présente l'extension spatiale de la structure d'antenne du transpondeur ; et
le matériau très perméable étant divisé en éléments de blindage oblongs et en espaces libres qui sont disposés respectivement entre les éléments de blindage, et les éléments de blindage étant disposés de façon essentiellement parallèle entre eux.

28. Transpondeur qui présente au moins une puce et une structure d'antenne et qui est fixé sur une surface électriquement conductrice, au moins un équipement selon l'une des revendications 15 à 26 étant placé entre le transpondeur et la surface électriquement conductrice.
